# EUROPÄISCHE PATENTSCHRIFT

(11) **EP 0 790 657 B1**
(45) Veröffentlichungstag und Bekanntmachung des Hinweises auf die Patenterteilung: **19.07.2000**
(21) Anmeldenummer: 96120577.0
(22) Anmeldetag: 20.12.1996
(51) Int. Cl.: H01M 8/06

(54) **Verfahren zum Betreiben eines Brennstoffzellensystems**
Method for operating a fuel cell system
Procédé de fonctionnement d'un système de piles à combustible

(30) Priorität: 14.02.1996 DE 19605404
(43) Veröffentlichungstag der Anmeldung: 20.08.1997
(73) Patentinhaber: DBB Fuel Cell Engines GmbH, 73230 Kirchheim/Teck-Nabern (DE)
(72) Erfinder: zur Megede, Detlef, Dr., 89347 Bubesheim (DE); Schüssler, Martin, 89077 Ulm (DE)
(74) Vertreter: Kocher, Klaus-Peter

(56) Entgegenhaltungen:
- EP-A- 0 061 727
- EP-A- 0 668 622
- DE-A- 4 423 587
- US-A- 4 473 622
- US-A- 4 650 727
- US-A- 5 248 566
- PATENT ABSTRACTS OF JAPAN vol. 013, no. 474 (E-836), 26.Oktober 1989 & JP 01 186570 A (KAWASAKI HEAVY IND LTD), 26.Juli 1989, & CHEMICAL ABSTRACTS, vol. 112, no. 8, 19.Februar 1990 Columbus, Ohio, US; abstract no. 59727,
- PATENT ABSTRACTS OF JAPAN vol. 096, no. 004, 30.April 1996 & JP 07 335238 A (MITSUBISHI ELECTRIC CORP), 22.Dezember 1995,
- PATENT ABSTRACTS OF JAPAN vol. 014, no. 417 (C-0756), 10.September 1990 & JP 02 160602 A (KAWASAKI HEAVY IND LTD), 20.Juni 1990,

## Beschreibung

Die Erfindung betrifft ein Verfahren zum Betreiben eines Brennstoffzellensystems gemäß dem Oberbegriff des Patentanspruchs 1

Aus der US 4,904,548 ist ein Brennstoffzellensystem bekannt, bei dem in einem Reformer aus flüssigem Methanol und Wasser mit Hilfe der Dampfreformierung ein wasserstoffreiches Gas erzeugt und der Anode des Brennstoffzellensystems zugeführt wird. Die für die endotherme Dampfreformierung benötigte Wärmeenergie wird in einem Brennraum durch Oxidation des Anodenabgases und/oder von Kraftstoff erzeugt und auf den Reformer übertragen.

Weiterhin ist aus der US 4,650,727 ein gattungsgemäßes Brennstoffzellensystem mit einer Vorrichtung zur Herstellung von wasserstoffreichem Gas bekannt. Dieses Brennstoffzellensystem enthält einen Reformer, durch welchen ein Eduktgas im Kreislauf geführt wird. In der Rezirkulationsleitung ist zum einen ein Brennraum vorgesehen, in dem Anodenabgas oxidiert und dadurch die im Reformer benötigte Wärmeenergie bereitgestellt wird. Bei erhöhter Lastanforderung wird zusätzlicher Kraftstoff in dem Brennraum oxidiert. Bei sehr hoher Lastanforderung kann zusätzlich auch Kraftstoff und Luft in die Rezirkulationsleitung eingebracht und an einem dort zusätzlich vorgesehenen Oxidationskatalysator oxidiert werden.

Es ist die Aufgabe der Erfindung ein Verfahren zum Betreiben eines Brennstoffzellensystems mit verbessertem Gesamtwirkungsgrad zu schaffen

Die Aufgabe wird erfindungsgemäß durch die kennzeichnenden Merkmale des Patentanspruchs 1 gelöst.

Die Oxidation des Kraftstoffes direkt im Reformer weist den Vorteil auf, daß der dabei entstehende Wasserdampf für die Dampfreformierung des Kraftstoffes eingesetzt werden kann. Dadurch reduziert sich die benötigte Wassermenge. Außerdem entfällt die Wärmeenergie, die ansonsten für die Verdampfung des Wassers notwendig wäre. Schließlich wird durch die Erzeugung der Wärmeenergie direkt im Reformer die Dynamik des Gaserzeugungssystems verbessert.

Durch die Steuerung oder Regelung der zusätzlich zugeführten Kraftstoffmenge und der Sauerstoffmenge anhand der Reformertemperatur kann der Gesamtwirkungsgrad des Brennstoffzellensystems weiter erhöht werden, da immer nur gerade soviel Kraftstoff oxidiert wird, wie für die Aufrechterhaltung der Dampfreformierung notwendig ist.

Bei einem Lastwechsel zu höheren Leistungen steigt der Bedarf der Brennstoffzelle an Wasserstoff sprunghaft an. Die Produktion des Wasserstoffs durch den Reformer hinkt diesem erhöhten Bedarf aufgrund der begrenzten Dynamik jedoch zeitlich hinterher. Daher verringert sich für diesen Zeitraum der Wasserstoffgehalt im Anodenabgas, was zu einer Reduktion der zur Verfügung stehenden Wärmeenergie führt. Aufgrund des erhöhten Wasserstoffbedarfs liegt jedoch gerade zu diesem Zeitpunkt ein erhöhter Wärmebedarf vor. Aus diesem Grunde ist es vorteilhaft, wenn bei einem solchen Lastanstieg für eine vorgegebene Zeitdauer eine zusätzliche Kraftstoffmenge und Sauerstoff zum Reformer zugeführt wird, so daß die verringerte Wärmezufuhr durch den Brenner kompensiert wird.

Weitere Vorteile und Ausgestaltungen gehen aus den Unteransprüchen und der Beschreibung hervor. Die Erfindung ist nachstehend anhand einer Zeichnung, die den prinzipiellen Aufbau eines Brennstoffzellensystems zeigt, näher beschrieben.

Das Brennstoffzellensystem besteht aus einer Brennstoffzelle 1 und einem Reformer 2. Die Brennstoffzelle 1 weist einen Anodenraum 3 und einen Kathodenraum 4 auf, die von einer protonenleitenden Membran 5 getrennt sind. Dem Kathodenraum 4 wird über eine Leitung 6 ein sauerstoffhaltiges Gas, beispielsweise Luft, zugeführt. Der Anodenraum 3 wird vom Reformer 2 über eine Leitung 7 mit einem wasserstoffhaltigen Gas versorgt.

Die Brennstoffzelle 1 kann als Einzelzelle oder als sogenanntes Brennstoffzellenstack ausgebildet sein. In der Brennstoffzelle wird aus der in den Reaktionspartnern gebundenen chemischen Energie elektrische Energie freigesetzt. Hierzu wird der Wasserstoff an der Anode 3 oxidiert, der Sauerstoff an der Kathode 4 reduziert. Bei dieser elektrochemischen Reaktion entsteht zwischen den Elektroden eine Spannung. Durch eine Parallelbeziehungsweise Hintereinanderschaltung vieler solcher Zellen können Spannungen und Stromstärken erreicht werden, die zum Antrieb eines Fahrzeugs ausreichen.

Der Reformer 2 besteht aus einem Reaktionsraum 8, der durch eine wärmeleitende Trennwand 9 von einem Brennraum 10 abgetrennt ist. Dem Reaktionsraum 8 kann über Leitungen 11-13 Sauerstoff, Wasser und Kraftstoff zugeführt werden. Gemäß Ausführungsbeispiel wird der Sauerstoff in Form von Luft und der Kraftstoff in Form von Methanol CH₃OH zugeführt. Es kann jedoch auch reiner Sauerstoff beziehungsweise ein anderer geeigneter Kraftstoff verwendet werden. Die Medien Luft, Wasser und Kraftstoff werden dem Brennraum 10 bei Umgebungstemperatur zugeführt, so daß sich das Wasser und der Kraftstoff in flüssigem Zustand befinden. Eine vorherige Verdampfung des Wassers oder des Kraftstoffes erfolgt nicht.

Der Brennraum 10 wird über Leitungen 14-16 mit Luft beziehungsweise mit den Brennstoffzellenabgasen aus dem Kathodenraum 4 beziehungsweise Anodenraum 3 gespeist. Das Kathodenabgas kann bei Bedarf auch in den Reaktionsraum 8 oder direkt ins Freie geleitet werden. Die Verbrennungsabgase werden über eine weitere Leitung 17 aus dem Brennraum 10 abgeführt. Zur Steuerung des Systems sind in den Leitungen 6, 11-14 Dosierventile 18-22 angeordnet, die durch ein Steuergerät 23 angesteuert werden. Als Eingangsgrößen werden dem Steuergerät 23 unter anderem der von der Brennstoffzelle 1 bereitgestellte Strom I_{BZ} und die Temperatur T_{Ref} des Reformers 2 zugeführt.

Im Reaktionsraum 8 des Reformers 2 wird aus dem Kraftstoff unter Zugabe von Wasser anhand der Dampfreformierung an einem geeigneten Katalysator ein wasserstoffreiches Gas erzeugt:

CH₃OH + H₂O = 3 H₂ + CO₂ (1)

Die Menge an zugeführtem Kraftstoff und Wasser richtet sich nach der Wasserstoffmenge, die in der Brennstoffzelle 1 verbraucht wird. Da der Wasserstoffverbrauch proportional zum erzeugten Strom I_{BZ} in der Brennstoffzelle ist, kann im Steuergerät 3 anhand des Brennstoffzellenstroms I_{BZ} die Bedarfsmengen an Kraftstoff und Wasser ermittelt und über die Dosierventile 21, 20 entsprechend eingestellt werden. Gleichzeitig wird im Steuergerät 23 auch die im Kathodenraum 4 benötigte Luftmenge ermittelt und über das Dosierventil 18 eingestellt. Hierbei ist zu beachten, daß Brennstoffzellen üblicherweise mit einem Überschuß der Reaktionspartner betrieben wird. Der Wasserstoff wird beispielsweise mit 120-150% der eigentlichen Umsatzmenge in den Anodenraum 3 zugeführt. Daher ist auch im Anodenabgas noch ein großer Wasserstoffanteil enthalten. Das Kathodenabgas enthält den überschüssigen Sauerstoff, sowie das bei der Brennstoffzellenreaktion erzeugte Wasser.

Das Anodenabgas wird über die Leitung 16 zum Brennraum 10 des Reformers 2 geführt, wo es unter Abgabe von Wärmeenergie reagiert:

2 H₂ + O₂ = 2 H₂O (2)

Die Wärmeenergie wird über die wärmeleitende Trennwand 9 in den Reaktionsraum 8 eingeleitet, um dort den Wärmebedarf aufgrund der endothermen Dampfreformierung zu decken. Neben dieser direkten Einleitung der Wärmeenergie vom Brennraum 10 in den Reaktionsraum 8 ist es auch möglich, ein Wärmeträgermedium zwischenzuschalten.

In einem ersten Betriebszustand Z₁, in dem die aus der Verbrennung der Brennstoffzellenabgase erzeugte Wärmeenergie zur Aufrechterhaltung der Dampfreformierung im Reaktionsraum 8 des Reformers 2 ausreicht, wird die Zufuhr von Luft zum Reaktionsraum 8 durch schließen des Dosierventils 11 unterbunden und die Bedarfsmengen an Kraftstoff und Wasser werden ausschließlich auf der Basis des momentanen Brennstoffzellenstromes I_{BZ} ermittelt.

Die Zufuhr von zusätzlicher Luft zum Brennraum 10 ist über das Dosierventil 22 jederzeit möglich. Dieser Betriebszustand Z₁, das heißt bei gegebenem Wasserstoffüberschuß, weist den besten Gesamtwirkungsgrad des beschriebenen Brennstoffzellensystems auf, da kein zusätzlicher Kraftstoff zur Wärmeerzeugung benötigt wird.

In der Praxis ist die zusätzliche Verbrennung von Kraftstoff jedoch oft erforderlich, wenn die aus dem Brennraum 10 in den Reaktionsraum 8 eingetragene Wärmeenergie für die Aufrechterhaltung der endothermen Dampfreformierung nicht ausreicht. Dies kann unter anderem der Fall sein, wenn die auftretenden Wärmeverluste zu groß sind oder wenn der Wasserstoffüberschuß der Brennstoffzelle 1 zu gering ist. Weiterhin kann es bei einem Lastwechsel zu höheren Leistungen hin aufgrund des zeitlichen Versatzes zwischen dem Wärmebedarf der Dampfreformierungsreaktion und der Überschußmenge an Wasserstoff, die im Brennraum 10 zur Verfügung steht, zu einer ungenügenden Versorgung mit Wärmeenergie kommen.

Beim erfindungsgemäßen Verfahren ist daher ein zweiter Betriebszustand Z₂ vorgesehen, in dem eine zusätzliche Kraftstoffmenge K₊ und eine entsprechende Luftmenge L₊ in den Reaktionsraum 8 geleitet wird, so daß es dort idealerweise unter Wärmeabgabe zu einer vollständigen Verbrennung der zusätzlichen Kraftstoffmenge K₊ kommt:

CH₃OH + 1,5 O₂ = CO₂ + H₂O (3)

In diesem zweiten Betriebszustand Z₂ laufen somit beide Reaktionen (1) und (3) parallel zueinander ab. Dadurch ist es möglich, den bei der vollständigen Verbrennung entstehenden Wasserdampf bei der Dampfreformierung zu verwenden. Dadurch kann zum einen die von außen zugeführte Wassermenge durch eine entsprechende Ansteuerung des Dosierventils 20 um diesen Betrag verringert werden, was zu einem verringerten Wasserbedarf des Systems führt. Zum anderen wird aber auch weniger Energie benötigt, da das Wasser aus der Reaktion (2) bereits dampfförmig vorliegt, so daß auch der Gesamtwirkungsgrad des Systems erhöht wird.

Die im zweiten Betriebszustand Z₂ in den Reaktionsraum 8 zugeführte Luftmenge L₊ wird so gewählt, daß sie gerade zur Oxidation der zusätzlich zugeführten Kraftstoffmenge K₊ ausreicht. Die insgesamt zum Reaktionsraum 8 zugeführte Kraftstoffmenge setzt sich demmach im zweiten Setriebszustand Z₂ zusammen aus dem zur Wasserstofferzeugung nach Gleichung (1) benötigten Anteil und dem für die Oxidation nach Gleichung (3) benötigten Kraftstoffmenge K₊. Im ersten Betriebszustand Z₁ wird dagegen keine Luft und nur der nach Gleichung (1) benötigte Kraftstoffanteil in den Reaktionsraum 8 geführt. Die zusätzliche Kraftstoffmenge K₊ und die Luftmenge L₊ richtet sich nach dem Wärmebedarf im Reaktionsraum 8. Sie kann daher im Steuergerät 23 als Funktion der Reformertemperatur T_{Ref} ermittelt und mit Hilfe der Dosierventile 21, 19 entsprechend eingestellt werden. Es ist jedoch auch möglich, fest vorgegebene Mengen an zusätzlichem Kraftstoff K₊ und Luft L₊ zuzuführen, wobei die Temperaturregelung dann ausschließlich durch den Wechsel zwischen den beiden Betriebszuständen Z₁, Z₂ erfolgt.

Neben der Temperatur T_{Ref} kann aber auch die Wasserstoff-Stoffmenge in Anodenabgas und/oder die momentan geforderte Last als Führungsgröße für die Ermittlung der zusätzlichen Kraftstoffmenge K₊ und der Luftmenge L₊ verwendet werden. Die Wasserstoff-Stoffmenge im Anodenabgas kann mit einem geeigneten Sensor in der Leitung 16 ermittelt werden. Die geforderte Last wird beispielsweise über die Fahrpedalstellung erfaßt. Anstelle der momentanen Last kann jedoch auch der Lastverlauf in einer Zeitspanne Δt von einem vorherigen Zeitpunkt t-Δt bis zum momentanen Zeitpunkt t verwendet werden.

Durch eine gezielte Umschaltung zwischen diesen beiden Betriebszuständen Z₁, Z₂ kann somit verhindert werden, daß unnötig viel Kraftstoff verbraucht wird. Außerdem weist dieses Brennstoffzellensystem eine verbesserte Dynamik auf, da die zusätzlich benötigte Wärmeenergie direkt im Reaktionsraum 8 des Reformers 2 erzeugt wird und dadurch sofort für die Dampfreformierung zur Verfügung steht.

Die Umschaltung zwischen den beiden Betriebszuständen Z₁, Z₂ erfolgt beispielsweise mit Hilfe einer Temperaturüberwachung im Reaktionsraum 8 des Reformers 2. Sinkt die Temperatur T_{Ref} im Reaktionsraum 8, so wird der zweite Betriebszustand Z₂ aktiviert. Ist das Temperaturnieveau ausreichend, so wird auf den ersten Betriebszustand Z₁ umgeschaltet. Hierbei können entsprechende Schwellwerte Tₛ₁<=Tₛ₂ für die Umschaltvorgänge vorgesehen werden, wobei sich die beiden Schwellwerte für die Aktivierung Tₛ₁ beziehungsweise Deaktivierung Tₛ₂ des zweiten Betriebszustandes Z₂ unterscheiden können.

Wie bereits weiter oben beschrieben ist bei einem Lastwechsel zu höheren Leistungen hin aufgrund des verringerten Wasserstoffüberschußes im Anodenabgas damit zu rechnen, daß die Reformertemperatur T_{Ref} absinkt. Um einer Temperaturabnahme im Reaktionsraum 8 vorzubeugen kann daher beim Erkennen eines solchen Lastwechsels zu höheren Leistungen hin im Steuergerät 23 für eine vorgegebene Zeitdauer t₂ auf den zweiten Betriebszustand Z₂ umgeschaltet werden. Selbstverständlich können die beschrieben Umschaltkriterien auch beliebig kombiniert werden.

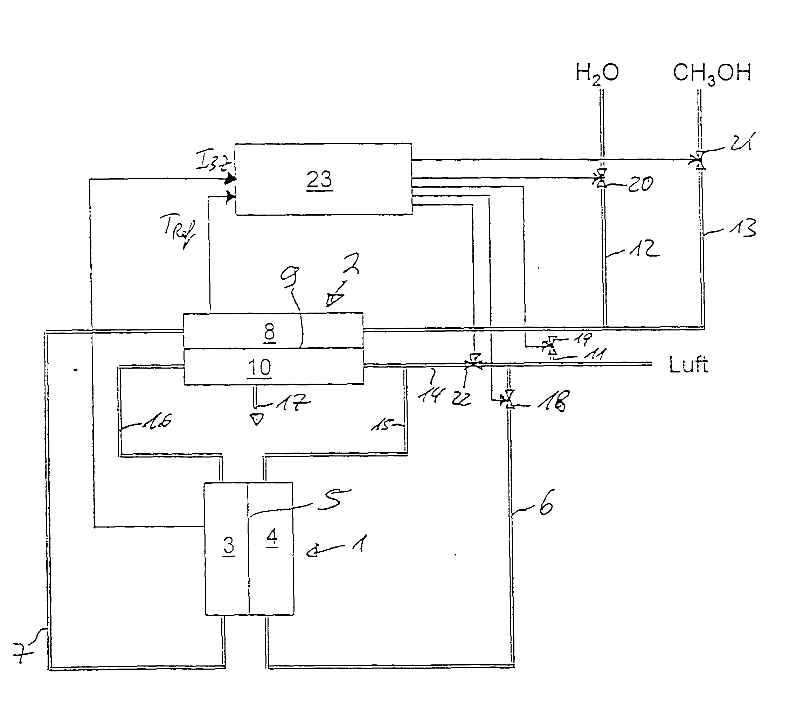

## Patentansprüche

1. Verfahren zum Betreiben eines Brennstoffzellensystems, bestehend aus
- einer Brennstoffzelle mit jeweils einem Anoden- und einem Kathodenraum, wobei dem Anodenraum ein wasserstoffreiches Gas und dem Kathodenraum ein sauerstoffhaltiges Gas zugeführt wird,
- einem Reformer zur Erzeugung des wasserstoffreichen Gases aus einem Kraftstoff mit Hilfe der endothermen Dampfreformierung, wobei Kraftstoff und Wasser bei Umgebungstemperatur und in Abhängigkeit von der benötigten Menge an wasserstoffreichen Gas zu einem Reaktionsraum des Reformers zugeführt wird,
- einem Brennraum, in dem die Brennstoffzellenabgase unter Zufuhr von Sauerstoff oxidiert werden, wobei die dabei erzeugte Wärmeenergie dem Reaktionsraum des Reformers zugeführt wird,
wobei in einem ersten Betriebszustand die Wärmeenergie für die Dampfreformierung ausschließlich durch eine Oxidation des Brennstoffzellenabgases im Brennraum bereitgestellt wird, wobei in einem zweiten Betriebszustand, in dem die Reaktionswärme aus dem Brennraum nicht ausreicht, zusätzliche Wärmeenergie durch Oxidation von Kraftstoff bereitgestellt wird, und wobei die Umschaltung zwischen den Betriebszuständen betriebsparameterabhängig erfolgt
**dadurch gekennzeichnet,**
daß auch in dem zweiten Betriebszustand (Z₂) im Brennraum (10) ausschließlich die Brennstoffzellenabgase unter Zufuhr von Sauerstoff oxidiert werden und daß zur Bereitstellung der zusätzlichen Wärmeenergie eine zusätzliche Kraftstoffmenge (K₊) und eine zugehörige Sauerstoffmenge (L₊) in den Reaktionsraum (8) des Reformers (2) zugeführt und dort oxidiert wird.

2. Verfahren nach 1 Anspruch 1,
**dadurch gekennzeichnet,**
daß die Temperatur (T_{Ref}) im Reformer erfaßt und mit einer vorgegebenen Temperaturschwelle (Tₛ₁) verglichen wird und daß auf den zweiten Betriebszustand (Z₂) umgeschaltet wird, wenn die vorgegebene Temperaturschwelle (Tₛ₁) unterschritten wird.

3. Verfahren nach Anspruch 2,
**dadurch gekennzeichnet,**
daß auf den ersten Betriebszustand (Z₁) zurückgeschaltet wird, wenn ein zweiter Temperaturschwellwert ( Tₛ₂=<Tₛ₁) überschritten wird.

4. Verfahren nach Anspruch 2,
**dadurch gekennzeichnet,**
daß die zusätzliche Kraftstoffmenge (K₊) und die Sauerstoffmenge (L₊)als Funktion der Reformertemperatur (T_{Ref}) ermittelt wird.

5. Verfahren nach Anspruch 1,
**dadurch gekennzeichnet,**
daß die zusätzliche Kraftstoffmenge (K₊) und die Sauerstoffmenge (L₊)als Funktion der Wasserstoff-Stoffmenge im Anodenabgas und/oder der momentan geforderten Last ermittelt wird.

6. Verfahren nach Anspruch 1,
**dadurch gekennzeichnet,**
daß die zusätzliche Kraftstoffmenge (K₊) und die Sauerstoffmenge (L₊)als Funktion des Lastverlaufs in einer Zeitspanne (Δt) von einem vorherigen Zeitpunkt (t-Δt) bis zum momentanen Zeitpunkt (t) ermittelt wird.

7. Verfahren nach Anspruch 1,
**dadurch gekennzeichnet,**
daß bei einem Lastwechsel zu höheren Leistungen hin für eine vorgegebene Zeitdauer (t₂) der zweite Betriebszustand (Z₂) aktiviert wird.

8. Verfahren nach Anspruch 1,
**dadurch gekennzeichnet,**
daß die zugeführte Wassermenge im zweiten Betriebszustand (Z₂) reduziert wird.

## Claims

1. A method of operating a fuel cell system consisting of
- a fuel cell having an anode and a cathode chamber respectively, a hydrogen-rich gas being delivered to the anode chamber and an oxygen-containing gas being fed to the cathode chamber,
- a reformer for generating the hydrogen-rich gas from a fuel with the aid of an endothermic steam reforming process, fuel and water being delivered to a reaction chamber of the reformer at environmental temperature and depending on the quantity of hydrogen-rich gas required,
- a combustion chamber in which the fuel cell exhaust gases are oxidised as oxygen is fed in, the heat energy generated being delivered to the reaction chamber of the reformer,
whereby, in a first operating state, the heat energy for the steam reforming process is supplied exclusively by oxidising the fuel cell exhaust gases in the combustion chamber, whereby, in a second operating state in which the reaction heat from the combustion chamber is not sufficient, additional heat energy is provided by oxidising fuel, and whereby the changeover between the operating states is effected on the basis of operating parameters,
**characterised in that**
even in the second operating state (Z₂) the fuel cell exhaust gases exclusively are oxidised in the combustion chamber (10) by adding oxygen and in that in order to provide the additional heat energy, an additional quantity of fuel (K₊) and a related quantity of oxygen (L₊) are delivered to the reaction chamber (8) of the reformer (2) and oxidised there.

2. A method as claimed in claim 1,
**characterised in that**
the temperature (T_{Ref}) in the reformer is detected and compared with a predetermined temperature threshold (Tₛ₁) and a switch is made to the second operating state (Z₂) if the temperature falls below the predetermined temperature threshold (Tₛ₁).

3. A method as claimed in claim 2,
**characterised in that**
a switch back to the first operating state (Z₁) is effected if a second temperature threshold (Tₛ₂=<Tₛ₁) is exceeded.

4. A method as claimed in claim 2,
**characterised in that**
the additional fuel quantity (K₊) and the oxygen quantity (L₊) are determined as a function of the reformer temperature (T_{Ref}).

5. A method as claimed in claim 1,
**characterised in that**
the additional fuel quantity (K₊) and the oxygen quantity (L₊) are determined as a function of the quantity of hydrogen-substance in the anode exhaust gas and/or the currently required load.

6. A method as claimed in claim 1,
**characterised in that**
the additional fuel quantity (K₊) and the oxygen quantity are determined as a function of the change in load over a period of time (Δt) from a predetermined point in time (t-Δt) to the current point in time (t).

7. A method as claimed in claim 1,
**characterised in that**
when there is a change in load to higher output levels, the second operating state (Z₂) is activated for a predetermined period of time (t₂).

8. A method as claimed in claim 1,
**characterised in that**
the quantity of water delivered in the second operating state (Z₂) is reduced.

## Revendications

1. Procédé pour faire fonctionner un système de pile à combustible comprenant :
- une pile à combustible avec respectivement un espace anodique et un espace cathodique, l'espace anodique étant alimenté avec un gaz riche en hydrogène et l'espace cathodique avec un gaz contenant de l'oxygène,
- un reformeur pour produire le gaz riche en hydrogène à partir d'un carburant à l'aide du reformage de vapeur endothermique, dans lequel du carburant et de l'eau sont alimentés à la température ambiante et en fonction de la quantité de gaz riche en hydrogène nécessaire dans un espace de réaction du reformeur,
- un espace de combustion dans lequel les effluents gazeux de la pile à combustible sont oxydés avec alimentation en oxygène, l'énergie thermique ainsi produite étant introduite dans l'espace de réaction du reformeur,
dans lequel, dans un premier état de fonctionnement, l'énergie thermique pour le reformage de vapeur est fournie exclusivement par une oxydation des effluents gazeux de la pile à combustible dans l'espace de combustion dans lequel dans un deuxième état de fonctionnement où la chaleur de la réaction provenant de l'espace de combustion n'est pas suffisante, de l'énergie thermique supplémentaire est fournie par l'oxydation de carburant, et dans lequel le passage d'un état de fonctionnement à l'autre se fait en fonction de paramètres de fonctionnement,
caractérisé en ce que,
dans le deuxième état de fonctionnement (Z₂) aussi, seuls les effluents gazeux de la pile à combustible sont oxydés dans l'espace de combustion (10) avec une alimentation en oxygène, et en ce que, pour fournir l'énergie thermique supplémentaire, on introduit une quantité supplémentaire de carburant (K₊) et une quantité d'oxygène correspondante (L₊) dans l'espace de réaction (8) du reformeur (2) et on y effectue une oxydation.

2. Procédé selon la revendication 1, caractérisé en ce que la température (T_{réf}) dans le reformeur est détectée et comparée avec un seuil de température (Tₛ₁) prédéterminé et en ce que le passage au deuxième état de fonctionnement se fait lorsque la température passe en dessous du seuil de température (Tₛ₁) prédéterminé.

3. Procédé selon la revendication 2, caractérisé en ce qu'on repasse au premier état de fonctionnement (Z₁) lorsque la température dépasse un deuxième seuil de température (Tₛ₂ ≤ Tₛ₁).

4. Procédé selon la revendication 2, caractérisé en ce que la quantité de carburant supplémentaire (K₊) et la quantité d'oxygène (L₊) sont déterminées en fonction de la température (T_{réf}) du reformeur.

5. Procédé selon la revendication 1, caractérisé en ce que la quantité de carburant supplémentaire (K₊) et la quantité d'oxygène (L₊) sont déterminées en fonction du rapport molaire de l'hydrogène dans l'effluent gazeux anodique et/ou en fonction de la charge instantanée exigée.

6. Procédé selon la revendication 1, caractérisé en ce que la quantité de carburant supplémentaire (K₊) et la quantité d'oxygène (L₊) sont déterminées en fonction de l'allure de la charge sur une période (Δt) allant d'un temps précédent (t-Δt) jusqu'au temps instantané (t).

7. Procédé selon la revendication 1, caractérisé en ce que le deuxième état de fonctionnement (Z₂) est activé lors d'une variation de la charge, afin de donner des performances supérieures, pendant une durée (t₂) prédéterminée.

8. Procédé selon la revendication 1, caractérisé en ce que la quantité d'eau alimentée dans le deuxième état de fonctionnement (Z₂) est réduite.
